# EUROPEAN PATENT APPLICATION

(11) **EP 3 045 241 A1**
(43) Date of publication of application: **20.07.2016**
(21) Application number: 14843976.3
(22) Date of filing: 04.09.2014
(51) Int. Cl.: B22F 7/06, B22F 3/02, B22F 5/00, B22F 7/00, C22C 38/00, C22C 38/16, F16C 33/12, F16C 33/14

(54) **SLIDING MEMBER AND METHOD FOR PRODUCING SAME**

(30) Priority: 10.09.2013 JP 2013186993; 05.02.2014 JP 2014020343; 29.07.2014 JP 2014153710
(71) Applicant: NTN Corporation, Osaka-shi, Osaka 550-0003 (JP)
(72) Inventor: SUGAI, Yousuke, Ama-gun Aichi 497-8541 (JP); ITO, Yoshinori, Ama-gun Aichi 497-8541 (JP); MOURI, Toshihiko, Ama-gun Aichi 497-8541 (JP); KOMORI, Isao, Ama-gun Aichi 497-8541 (JP)
(74) Representative: Eder Schieschke & Partner mbB
(86) International application number: PCT/JP2014/073317
(87) International publication number: WO 2015/037509

(57) **Abstract**

A sliding member (1) is made of a sintered compact. This sintered compact includes: a sliding layer (2) that contains Fe containing an alloying element of at least one kind selected from among Ni, Mo, Mn, and Cr, and Cu and C as main components; and a base layer (3) that is sintered together with the sliding layer (2) while being in contact with the sliding layer (2), and contains Fe, Cu, C and a metal having a melting point lower than a melting point of the Cu as main components. The sliding layer (2) has a sliding surface (A) slidable relative to another member.

## Description

### Technical Field

The present invention relates to a sliding member having a sliding surface slidable relative to another member, and to a method of manufacturing the sliding member.

### Background Art

A bearing to be used at, for example, a joint portion of an arm of construction machinery is required to have excellent wear resistance because remarkably large surface pressure is applied to a bearing surface of the bearing. As the bearing of this type, for example, there are known a bearing obtained by cutting casting alloy and a bearing obtained by embedding particles of graphite in a sliding surface in a spotted manner. However, both of the bearings have a problem of high manufacturing cost. Accordingly, instead of those bearings, a sinteredbearingmade of sinteredmetal excellent in moldability is used. For example, in Patent Literature 1, there is disclosed, as a bearing for construction machinery, a sintered bearing that is obtained by dispersing copper in iron-carbon-based alloy containing martensitic structure. This sintered bearing is obtained by quenching (oil-quenching, for example) an entire sintered compact after sintering, and finishing the sintered compact by cutting and grinding inner and outer peripheral surfaces and end surfaces thereof into predetermined dimensions.

In addition, in Patent Literature 2, there is disclosed a method of molding a green compact having a double-layer structure, which is formed into a sintered compact including portions different from each other in materials so that those portions exert functions different from each other. Specifically, an inner peripheral surface side and an outer peripheral surface side of the sintered compact are different from each other in materials. More specifically, an outer peripheral surface side of the green compact is made of a first powder having high strength, whereas an inner peripheral surface side thereof is made of a second powder excellent in low-friction property, and then this green compact is sintered.

### Citation List

Patent Literature 1: JP 2003-222133 A
Patent Literature 2: JP 2005-95979 A

### Summary of Invention

### Technical Problem

In the double-layer-structure sintered compact disclosed in Patent Literature 2, in order to reduce a friction coefficient of the inner peripheral surface, a copper-rich layer needs to be formed on the inner peripheral surface of the sintered compact. Meanwhile, in order to secure high strength on the outer peripheral surface side of the double-layer-structure sintered compact, specifically, strength as high as strength that is necessary for the bearing disclosed in Patent Literature 1, which is arranged at the joint portion of the arm of the construction machinery, the outer peripheral surface side of the sintered compact needs to be formed of structure containing iron and carbon as main components (pearlite structure). In this case, in order to form the pearlite structure, the green compact is sintered at a temperature of 1, 130°C or more.

However, when sintering is performed at the temperature higher than the melting point of copper (1,083°C) in this manner, copper contained in the copper-rich layer on the inner peripheral surface is completely molten. The molten copper is drawn into a radially outer layer having a low copper concentration, and hence copper structure is not sufficiently formed on the inner peripheral surface through the sintering. Meanwhile, when the sintering temperature is merely reduced, strength that is necessary on the outer peripheral surface side of the sintered compact cannot be secured. As a result, with this configuration, an intended object of the double-layer-structure sintered compact cannot be achieved.

In view of the circumstances, the present invention has an object to provide a sliding member that allows a sliding surface to be enhanced in sliding property and durability while securing strength of a sintered compact, and to provide a method of manufacturing the sliding member.

### Solution to Problem

In order to achieve the above-mentioned object, according to one embodiment of the present invention, there is provided a sliding member made of a sintered compact to have a sliding surface slidable relative to another member, the sliding member comprising: a sliding layer that contains Fe containing an alloying element, Cu, and C as main components; and a base layer that is sintered together with the sliding layer while being in contact with the sliding layer, and contains Fe, Cu, a low-melting-point metal having a melting point lower than a melting point of the Cu, and C as main components, the sliding layer having the sliding surface. This sliding member can be used, for example, as a bearing at a joint portion of an arm of construction machinery.

When Cu and the low-melting-point metal are contained in the base layer, at the time of sintering, first, the low-melting-point metal contained in the base layer is molten. A melt of the low-melting-point metal is dispersed deeply into Fe particles by capillary action. Further, the melt of the low-melting-point metal wets surfaces of Cu particles. Thus, Cu is molten at a temperature lower than its melting point, and Cu and the low-melting-point metal thus molten penetrate the Fe particles, and disperse to the inside of the Fe particles. With this, the Fe particles are firmly bound to each other, and strength of the base layer is increased. Thus, even when the sintering temperature is reduced, strength of the bearing can be secured. When the sintering temperature is set to a temperature lower than the melting point of Cu, the Cu particles contained in the sliding layer is maintained in a solid form without being molten through the sintering. Thus, the Cu particles contained in the sliding layer are not drawn into the base layer, and hence a target amount of Cu structure can be distributed in the sliding surface. In this manner, both a sliding property of the sliding surface and strength of the sintered compact can be secured.

In the sliding member, when the alloying element contained in the sliding layer comprises a quenching-property enhancing element (at least one kind selected from among Ni, Mo, Mn, and Cr), without performing heat treatment such as carburizing and quenching, martensitic transformation and bainitic transformation can be caused at least in a part of Fe structure in the sliding layer through a cooling process after the sintering (sinter hardening). With this, the sliding layer having the sliding surface is increased in hardness, and hence the sliding surface can be enhanced in wear resistance. Further, the strength of the base layer is also increased through the penetration and the dispersion of the Cu particles and particles of the low-melting-point metal into the Fe particles in the base layer, and hence strength of the entire sintered compact is increased. Thus, the sintered compact can be used as a sliding member to which an impact load is frequently applied under large surface pressure, such as a bearing to be used at the joint portion of the arm of the construction machinery.

Meanwhile, basically, the base layer, which accounts for a large proportion of the sintered compact, does not contain the above-mentioned alloying element. Thus, also after the cooling, a large proportion of the base layer is not subjected to the sinter hardening. Therefore, the martensitic transformation and the bainitic transformation do not occur in Fe structure in the base layer. When the quenching-property enhancing element is mixed only into the sliding layer in this manner, a use amount of the expensive alloying element is reduced, and hence cost reduction can be achieved. Further, the base layer is softer than the sliding layer. Thus, dimensional correction of the sintered compact can be performed in sizing (step of reshaping the sintered compact through compression in the die assembly). In the configuration of Patent Literature 1, the entire sintered compact is hardened through oil quenching after the sintering, and hence the dimensional correction of the sintered compact needs to be performed through machining such as cutting and grinding. However, the dimensional correction of the sliding member of the present invention can be performed through sizing. Thus, the machining need not be performed. Further, the quenching step after the sintering need not be performed. In this manner, the quenching step and the machining step after the sintering can be omitted. Thus, further cost reduction of the sliding member can be achieved in comparison with the invention disclosed in Patent Literature 1.

It is preferred that phosphorus be used as the low-melting-point metal contained in the base layer. Further, it is preferred that a concentration of the low-melting-point metal in the base layer be set within a range of from 0.1 wt% to 0.6 wt%.

When a concentration of Cu in the sliding layer is set to 10 wt% or more and 30 wt% or less, cost increase due to excessive use of copper can be prevented while securing the sliding property of the sliding surface. In order to bind the Fe particles in the base layer to each other, Cu needs to be contained also in the base layer. At this time, when a concentration of Cu in the base layer is set lower than the concentration of Cu in the sliding layer, a use amount of expensive copper can be reduced. With this, cost reduction can be achieved.

When the sintered compact is obtained through sintering at a temperature that is lower than the melting point of Cu and higher than a starting temperature of a reaction between Fe and C, copper contained in the sliding layer can be maintained in a solid form without being completely molten through the sintering. With this, a sliding property of the sliding layer can be enhanced. Further, through the reaction between Fe and C, a hard pearlite phase (partially, ferrite phase) is formed in the Fe structure, and hence the strength of the base layer can be secured.

A cross-section of the sliding layer orthogonal to an axial direction of the sliding member may be formed into a partially cylindrical shape with ends. In this case, the sliding layer that needs to be a copper-rich layer is formed not over an entire circumferential region of the sintered compact but only in a partial circumferential region thereof. With this, in comparison with a case where the sliding surface is formed over the entire circumferential region of the sintered compact, the use amount of expensive copper canbe reduced. Thus, cost reduction of the sintered bearing can be achieved. Note that, when the sliding member is used as a bearing, a shaft is unlikely to slide relative to an entire periphery of an inner peripheral surface of the sliding member. In the sliding member, by influence of gravity, a region sliding relative to the shaft is limited to the partial circumferential region in many cases. Thus, prior to fixing the sliding member to a housing, an orientation or a posture of the sliding member is adjusted so that the sliding surface of the sliding layer is positioned at the limited partial region. With this, the shaft can be stably supported by the sliding surface.

The above-mentioned sliding member can be obtained by preparing a first powder that contains Fe, Cu, a metal having a melting point lower than a melting point of the Cu, and C as main components, preparing a second powder that contains Fe containing an alloying element, Cu, and C as main components, arranging a partition member in a die assembly to form a first cavity and a second cavity, filling the first powder into the first cavity, filling the second powder into the second cavity, compressing, under a state in which the partition member is removed, the first powder and the second powder in the die assembly simultaneously to form a green compact, sintering the green compact to form the base layer having a composition corresponding to the first powder and the sliding layer having a composition corresponding to the second powder, and performing sizing and oil impregnation of a sintered compact obtained after the sintering.

At the time of compressing the first powder and the second powder simultaneously to mold the green compact, when an apparent density of the first powder and an apparent density of the second powder are significantly different from each other, the green compact cannot be properly molded. Meanwhile, when a thickness of the base layer is set larger than a thickness of the sliding layer, and when the apparent density of the first powder is set lower than the apparent density of the second powder, the green compact can be molded. In other words, even when the apparent density of the first powder and the apparent density of the second powder are somewhat different from each other, the green compact can be easily molded.

### Advantageous Effects of Invention

As described above, according to the one embodiment of the present invention, the sliding surface can be enhanced in sliding property and durability while securing the strength of the sintered compact.

### Brief Description of Drawings

FIG. 1 is a cross-sectional view for illustrating a joint portion to which a sintered bearing is assembled.
FIG. 2 is a front view for illustrating the sintered bearing (first embodiment).
FIG. 3 is a cross-sectional view for illustrating a state in which a first powder is filled in a compression-molding step.
FIG. 4 is a cross-sectional view for illustrating a state in which a second powder is filled in the compression-molding step.
FIG. 5 is a cross-sectional view for illustrating a state in which a partition member is lowered in the compression-molding step.
FIG. 6 is a cross-sectional view for illustrating a state in which a surplus of the powder is removed in the compression-molding step.
FIG. 7 is a cross-sectional view for illustrating a state in which the mixed powders are compressed by an upper punch in the compression-molding step.
FIG. 8 is a cross-sectional view for illustrating a state in which a green compact is taken out of a die assembly in the compression-molding step.
FIG. 9 is a schematic cross-sectional view for illustrating a sintering furnace that is used in a sintering step.
FIG. 10 is a cross-sectional view for illustrating a die assembly that is used in a sizing step.
FIG. 11 is a cross-sectional view for illustrating the manufacturing steps performed after the compression-molding step for the sintered bearing.
FIG. 12 is a graph for showing a concentration gradient of alloying elements for enhancing a quenching property.
FIG. 13A is a view for illustrating microstructure of a sliding layer.
FIG. 13B is a view for illustrating microstructure of a base layer.
FIG. 14 is a radial cross-sectional view for illustrating another sintered bearing.
FIG. 15 is a cross-sectional view for illustrating a joint portion to which a sintered bearing is assembled.
FIG. 16 is a radial cross-sectional view for illustrating the sintered bearing (second embodiment).
FIG. 17 is a plan view for illustrating a molding die assembly apparatus.
FIG. 18 is a radial cross-sectional view for illustrating a sintered bearing (third embodiment).
FIG. 19 is a radial cross-sectional view for illustrating a sintered bearing (fourth embodiment).
FIG. 20 is an axial cross-sectional view for illustrating the sintered bearing (fourth embodiment).
FIG. 21 is a cross-sectional view for illustrating a state in which a first powder and a second powder are filled in another compression-molding step.
FIG. 22 is a cross-sectional view for illustrating a state in which a third powder is filled in the another compression-molding step.
FIG. 23 is a cross-sectional view for illustrating a state in which partition members are removed in the another compression-molding step.
FIG. 24 is a cross-sectional view for illustrating a state in which the powders are compressed in the another compression-molding step.
FIG. 25 is a cross-sectional view for illustrating the manufacturing steps performed after the another compression-molding step for the sintered bearing.
FIG. 26 is an axial cross-sectional view for illustrating a sintered bearing (fifth embodiment).
FIG. 27 is a cross-sectional view for illustrating still another compression-molding step.

### Description of Embodiments

Now, with reference to the drawings, description is made of a sintered bearing according to embodiments of the present invention, which is taken as an example of a sliding member of the present invention.

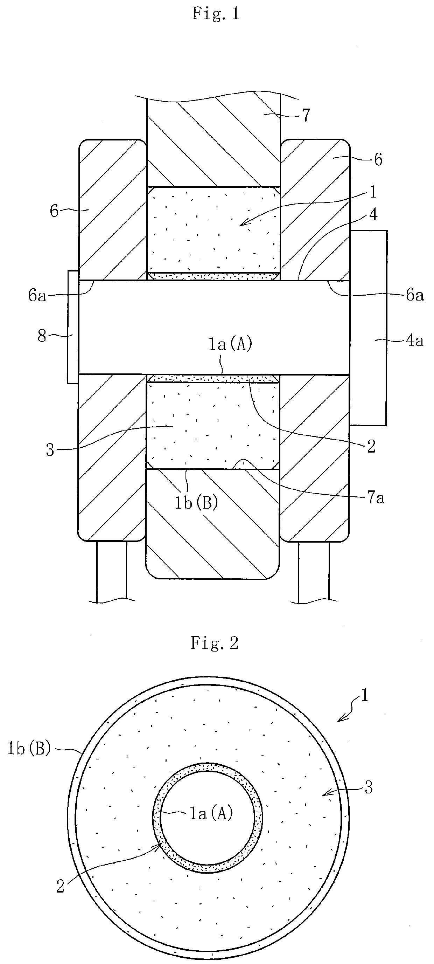

The sintered bearing according to the present invention is suited to use at a joint portion configured to couple arms (comprising a boom and a bucket) of construction machinery such as a hydraulic excavator and a bulldozer. FIG. 1 is a view for illustrating a schematic structure of such a joint portion. As illustrated in FIG. 1, at this joint portion, a distal end of a second arm 7 is inserted into a first arm 6 formed into a forked shape. An insertion hole 7a is formed at the distal end of the second arm 7, and an outer peripheral surface 1b of a sintered bearing 1 made of a sintered compact is fixed in the insertion hole 7a by an appropriate mounting method such as press-fitting. A pin 4 is inserted into pin holes 6a formed respectively through forked portions of the first arm 6, and is inserted along an inner peripheral surface 2a of the sintered bearing 1. With this, the first arm 6 and the second arm 7 are coupled to each other in a rotatable manner. The pin 4 is fixed to the first arm 6. Thus, when the first arm 6 and the second arm 7 are pivoted relative to each other, the pin 4 is rotated relative to the inner peripheral surface 1a of the bearing 1. Reference symbol 8 denotes a retainer configured to restrict the pin 4 from dropping off. At this joint portion, a head portion 4a of the pin 4 or the retainer 8 is removed from a shaft portion of the pin 4 so that the pin 4 is withdrawn. With this, the first arm 6 and the second arm 7 are separated from each other, and maintenance of the bearing 1 and the pin 4 can be performed.

As illustrated in FIG. 1 and FIG. 2, the sintered bearing 1 is made of a cylindrical sintered compact, and integrally comprises a sliding layer 2 on a radially inner side and a base layer 3 on a radially outer side while being in contact with each other. In the illustrated example, the sintered bearing 1 comprises only the sliding layer 2 and the base layer 3, and each of the layers is formed into a tubular shape, specifically, a cylindrical shape. A cross-section of the inner peripheral surface 1a of the sintered bearing 1 (inner peripheral surface of the sliding layer 2) is formed into an axially-straight perfectly circular shape, and serves as a sliding surface A (bearing surface) that supports, in a relatively rotatable manner, the shaft portion of the pin 4 (hereinafter referred to as "shaft 4"), which is inserted along an inner periphery of the sintered bearing 1. A cross-section of the outer peripheral surface 1b of the sintered bearing 1 (outer peripheral surface of the base layer 3) is formed into an axially-straight perfectly circular shape, and serves as a mounting surface B to be mounted to other members such as the second arm 7. Both axial end surfaces of the sintered bearing 1 are each a flat surface expanding in a direction orthogonal to an axial direction. Chamfers are formed between both the axial end surfaces and each of the inner peripheral surface 2a and the outer peripheral surface 3a of the sintered bearing 1.

When being used at the joint portion, the sintered bearing 1 is formed so as to have, for example, an inner diameter of from 30 mm to 100 mm and a radial thickness of from 5 mm to 50 mm. A radial thickness of the sliding layer 2 is set to from approximately 1% to approximately 20% (preferably from approximately 2% to approximately 10%) of the radial thickness of the sintered bearing 1, and an actual thickness dimension thereof is set, for example, to from approximately 0.3 mm to approximately 2 mm. When the sliding layer 2 is extremely thin, a filling property of a raw-material powder at the time of molding is deteriorated and an allowable wear limit is reduced. When the sliding layer 2 is extremely thick, use amounts of elements for enhancing a quenching property and copper, which are described later, are increased to cause cost increase.

As a lubricating material, a lubricating oil such as a mineral oil and a synthetic oil is impregnated into fine pores of the porous sintered bearing 1. At the time of relative rotation between the first arm 6 and the second arm 7, the lubricating oil retained in the inner pores of the sintered bearing 1 seeps out of surface pores of the inner peripheral surface 1a of the sintered bearing 1, and a film of the lubricating oil is formed between the inner peripheral surface 1a and the shaft 4. With this, wear of the inner peripheral surface 1a is suppressed or prevented. An oil-impregnation rate of the entire sintered bearing 1 is set, for example, to from 10 vol% to 25 vol%, preferably from 15 vol% to 25 vol%. This is because, when the oil-impregnation rate falls below 10 vol%, a desired lubricating property cannot be stably maintained or exerted over a long time period, and when the oil-impregnation rate exceeds 25 vol%, a proportion of the inner pores is increased. In this manner, mechanical strength necessary for the sintered bearing 1 may not be secured.

Further, when a viscosity of the lubricating oil to be impregnated into the sintered bearing 1 is extremely low, the lubricating oil is liable to leak out to an outside of the bearing. In addition, the oil film having predetermined strength cannot be formed between the inner peripheral surface 1a and the shaft 4, with the result that the inner peripheral surface 1a is liable to be worn. Meanwhile, when the viscosity of the lubricating oil is extremely high, a seeping amount of the lubricating oil through the surface pores of the inner peripheral surface 1a is insufficient, with the result that the wear of the inner peripheral surface 1a may be accelerated. From such viewpoints, it is preferred that the lubricating oil have, at a temperature of 40°C, a kinematic viscosity of 5 mm²/s or more and 600 mm²/s or less, more preferably 50 mm²/s or more and 550 mm²/s or less, still more preferably 100 mm²/s or more and 500 mm²/s or less.

Note that, as the lubricating material to be impregnated into the inner pores of the sintered bearing 1, a liquid grease may be selected instead of the lubricating oil described above. The liquid grease to be used may be obtained, for example, by using, as a base oil, the lubricating oil having the kinematic viscosity within the above-mentioned ranges at the temperature of 40°C, and adding a soap-based thickener such as lithium soap, or a non-soap-based thickener such as urea to the base oil.

The sintered bearing 1 of the present invention has a double-layer structure comprising the sliding layer 2 and the base layer 3 that are different from each other in metal composition. The sintered bearing 1 having the double-layer structure is manufactured by sequentially performing a compression-molding step, a sintering step, a sizing step, and an oil-impregnating step described below.

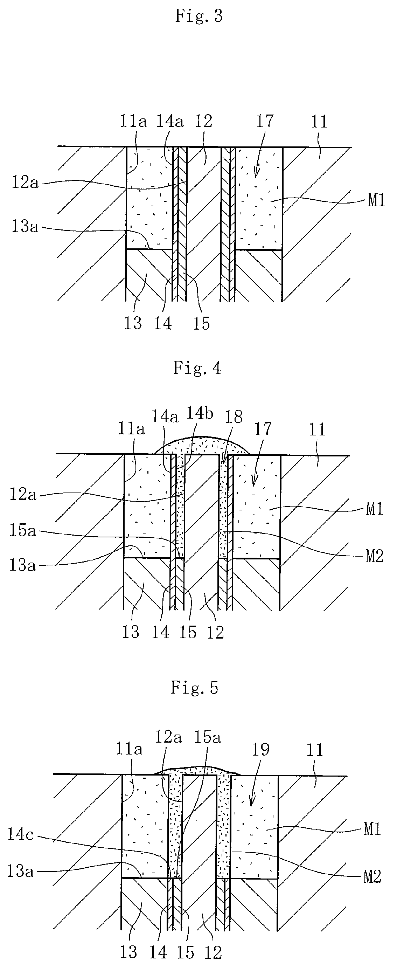

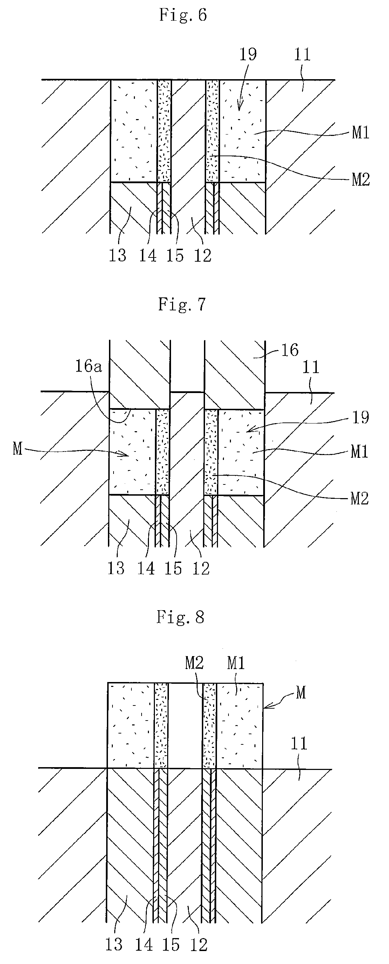

In the compression-molding step, there is employed a so-called two-color molding method in which a material for the sliding layer 2 and a material for the base layer 3 are fed into the same die assembly (die) to simultaneously mold the sliding layer 2 and the base layer 3. The two-color molding comprises forming two cavities on a radially outer side and a radially inner side in the die assembly, and filling respective powders into the cavities. The two-color molding is performed by using, for example, a die assembly illustrated in FIG. 3. The die assembly comprises a die 11, a core pin 12 arranged along an inner periphery of the die 11, an outer lower punch 13, a partition member 14, and an inner lower punch 15 that are arranged between an inner peripheral surface 11a of the die 11 and an outer peripheral surface 12a of the core pin 12, and an upper punch 16 (see FIG. 7). The outer lower punch 13, the partition member 14, and the inner lower punch 15 have concentric cylindrical shapes, and can be raised and lowered independently of each other.

First, as illustrated in FIG. 3, the partition plate 14 and the inner lower punch 15 are raised to an upper end position, and the outer lower punch 13 is lowered to a lower end position. With this, the inner peripheral surface 11a of the die 11, an outer peripheral surface 14a of the partition plate 14, and an end surface 13a of the outer lower punch 13 form a first cavity 17 on the radially outer side. A first powder M1 corresponding to the base layer 3 is filled into the first cavity 17. Description of a composition of the first powder M1 is made later.

Next, as illustrated in FIG. 4, the inner lower punch 15 is lowered to the lower end position. With this, an inner peripheral surface 14b of the partition plate 14, the outer peripheral surface 12a of the core pin 12, and an end surface 15a of the inner lower punch 15 form a second cavity 18 on the radially inner side. The second cavity 18 is formed in isolation from the first cavity 17, and a second powder M2 corresponding to the sliding layer 2 is filled into the second cavity 18. At this time, the second powder M2 is caused to overflow the inner cavity 18 so as to cover an upper side of the partition plate 14. Description of a composition of the second powder M2 is made later.

Next, as illustrated in FIG. 5, the partition plate 14 is lowered. Thus, the second powder M2 enters a space corresponding to the partition member 14, and the first powder M1 and the second powder M2 are slightly mixed to be brought into contact with each other. In this manner, a cavity 19 formed by the inner peripheral surface 11a of the die 11, the end surface 13a of the outer lower punch 13, an end surface 14c of the partition plate 14, the end surface 15a of the inner lower punch 15, and the outer peripheral surface 12a of the core pin 12 is filled with the first powder M1 and the second powder M2 in a double-layer state. Then, a surplus of the second powder M2 overflowing the cavity 19 is removed (see FIG. 6).

Under a state in which the partition member 14 is removed from the die assembly in this manner, the upper punch 16 is lowered as illustrated in FIG. 7 so that an end surface 16a of the upper punch 16 is pressed against the powders M1 and M2. With this, the powders M1 and M2 filled in the cavity 19 are compressed by the upper punch 16, the lower punches 13 and 15, the partition member 14, and the die 11. In this manner, a green compact M is molded. Then, as illustrated in FIG. 8, the outer lower punch 13, the partition plate 14, and the inner lower punch 15 are raised, and the green compact M is taken out of the die assembly.

Note that, the first powder M1 corresponding to the base layer 3 contains an iron powder, a copper powder, and a graphite powder as main components, and a low-melting-point metal as the balance. As the iron powder, there maybe used, for example, a reduced iron powder and an atomized iron powder. In particular, it is preferred to use a porous reduced iron powder excellent in oil impregnation property. As the copper powder, there may be used an electrolytic copper powder and an atomized copper powder. In particular, it is more preferred to use the electrolytic copper powder. This is because particles thereof have a branched shape as a whole, and hence strength of the green compact can be increased, and copper particles are easily dispersed among Fe particles at the time of sintering. Further, as the low-melting-point metal, there may be used, for example, metals having a melting point lower than that of copper, specifically, metals such as tin (Sn), zinc (Zn), and phosphorus (P) each having a melting point of 700°C or less. Such low-melting-point metals can be added, for example, by adding a powder of one kind to a powder mixture, or by using a powder that is alloyed with iron. Among those low-melting-point metals, particles of phosphorus are easily dispersed among particles of iron and can be dispersed deeply into the particles of iron. In addition, the particles of phosphorus also promote the dispersion of the particles of copper. In other words, phosphorus is compatible with both iron and copper. Thus, it is preferred that phosphorus be used as the low-melting-point metal. Specifically, when an iron-phosphorus alloy powder (Fe₃P) is mixed with the copper powder and the graphite powder, not only an advantage of ease of mixing and molding the first powder M1, but also an advantage of higher safety can be obtained.

It is preferred that mixing amounts of the powders in the first powder M1 be set so that the first powder M1 contains, for example, the copper powder of from 2 wt% to 5 wt%, the graphite powder of from 0.5 wt% to 0.8 wt%, and an alloy steel powder of iron and the low-melting-point metal as the balance. In this case, a ratio of the low-melting-point metal in the first powder M1 is set to from 0.1 wt% to 0.6 wt% (preferably from 0.3 wt% to 0.5 wt%) . The copper powder functions as a binder for binding the particles of the iron powder to each other. When a mixing amount of the copper powder is extremely small, strength of the base layer 3 is reduced. When the mixing amount of the copper powder is extremely large, dispersion of carbon is hindered to reduce strength and hardness of the sintered compact. For those reasons, the above-mentioned ranges are employed. The low-melting-point metal is mixed so as to be dispersed among the iron particles and to promote the dispersion of the copper particles among the iron particles, thereby increasing strength of the sintered compact. When a mixing amount of the low-melting-point metal is extremely small, such effects cannot be sufficiently exerted. When the mixing amount of the low-melting-point metal is extremely large, the low-melting-point metal is segregated to embrittle the sintered compact, resulting in reduction of the strength. For those reasons, the above-mentioned ranges are employed. Further, the graphite powder is mixed so as to react iron and carbon to each other at the time of sintering, thereby forming a hard pearlite phase. When a mixing amount of the graphite powder is small, the strength of the base layer cannot be secured. When the mixing amount of the graphite powder is extremely large, iron is transformed into fragile cementite structure, resulting in reduction of the strength. For those reasons, the above-mentioned ranges are employed.

Meanwhile, the second powder M2 corresponding to the sliding layer 2 is obtained by mixing the iron powder containing alloying elements (alloy steel powder), the copper powder, and the graphite powder with each other. As the alloying elements, quenching-property enhancing elements, specifically, any one kind or two or more kinds selected from among Ni, Mo, Mn, and Cr are used. In the present invention, Ni and Mo are selected, and hence an alloy steel powder of Ni, Mo, and iron (Fe-Ni-Mo-based alloy steel powder) is used. The quenching-property enhancing elements are added so as to cause martensitic transformation and bainitic transformation as described later for sinter hardening. Ni and Mo are preferred due to their significantly excellent effects of enhancing quenching properties. It is preferred that a completely alloyed powder be used as the alloy steel powder in the second powder M2. Although it is preferred that the electrolytic copper powder be used as the copper powder, the atomized copper powder may be used.

It is preferred that mixing amounts of the powders in the second powder M2 be set so that the second powder M2 contains the copper powder of from 10 wt% to 30 wt% (preferably from 15 wt% to 20 wt%), the graphite powder of from 0.2 wt% to 1.0 wt% (preferably from 0.3 wt% to 0.8 wt%), and the alloy steel powder as the balance. Further, a kind and an amount of the alloy steel powder are selected so that the second powder M2 contains Ni at a ratio of from 1.0 wt% to 4.0 wt% (preferably from 1.5 wt% to 3.5 wt%), and Mo at a ratio of from 0.5 wt% to 2.0 wt% (preferably from 0.5 wt% to 1.5 wt%) . Mixing amounts of Ni and Mo are set based on moldability and the effects of enhancing quenching properties. When the mixing amount of copper is extremely small, a sliding property of the sliding surface 2a is deteriorated. When the mixing amount of copper is extremely large, the bearing surface is extremely softened to cause problems with wear resistance. For those reasons, the above-mentioned ranges are employed. The graphite powder in the second powder M2 is mixed so as to react iron and carbon to each other at the time of sintering, thereby mainly forming a martensite phase and a bainite phase, and to cause the second powder M2 to function as a solid lubricant. An upper limit and a lower limit of a mixing ratio thereof are set for the same reason that the mixing ratio of the graphite powder in the first powder M1 is set.

Apparent densities of the first powder M1 corresponding to the base layer 3 and the second powder M2 corresponding to the sliding layer 2 are each from 1.0 g/cm³ to 4.0 g/cm³. Both the powders are inevitably different from each other in apparent density due to the difference in composition therebetween. As a result, at the time of molding the first powder M1 and the second powder M2 simultaneously in the compression-molding step, due to the difference in apparent density, the green compact M may be collapsed, for example, and hence may be difficult to mold. However, as in this embodiment, the thickness of the sliding layer 2 is sufficiently smaller than a thickness of the base layer 3 (as described above, thickness of the sliding layer 2 is from 1% to 20%, preferably from 2% to 10% of the thickness of the sintered bearing), and the apparent density of the first powder M1 is lower than the apparent density of the second powder M2. In such settings, when a difference in density therebetween is 0.5 g/cm³ or less, the green compact M can be molded even when the first powder M1 and the second powder M2 are molded simultaneously. Thus, it is preferred that the apparent density of the first powder M1 be set lower than the apparent density of the second powder M2, and that the difference in density therebetween be suppressed to 0.5 g/cm³ or less.

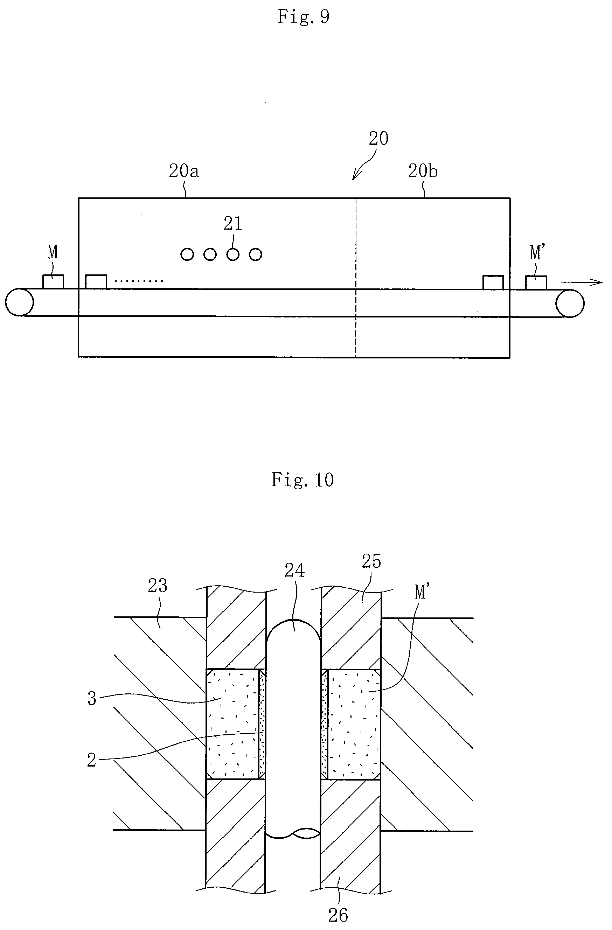

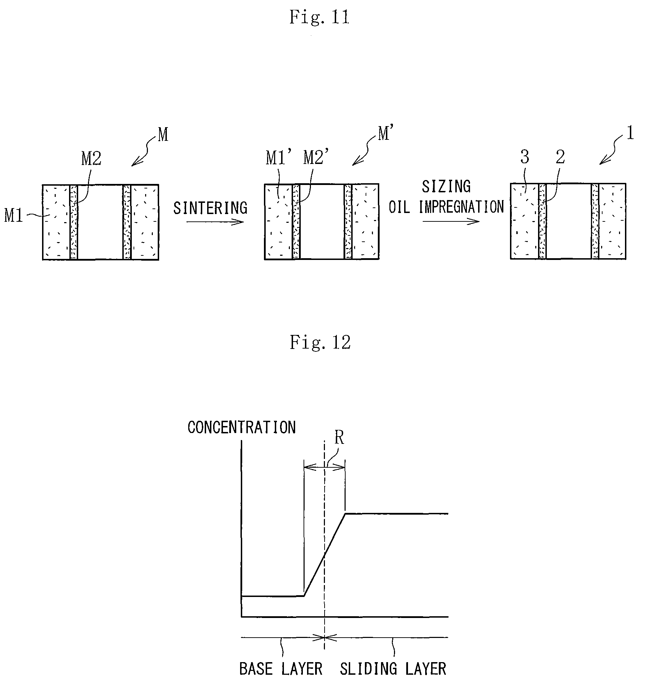

The green compact M obtained through the compression-molding step described above is sintered in the sintering step. With this, a sintered compact M' is obtained (see FIG. 11). At this time, the base layer 3 is sintered together with the sliding layer 2 while being in contact with the sliding layer 2. Thus, through the sintering, the sliding layer 2 and the base layer 3 can be integrated with each other. As a sintering furnace, there may be used a continuous sintering furnace 20 comprising, as illustrated in FIG. 9, a sintering zone 20a in which heaters 21 are installed, and a cooling zone 20b configured to allow natural heat dissipation. The continuous sintering furnace 20 is filled with an atmospheric gas containing CO. A sintering temperature (temperature in sintered structure) is set lower than the melting point of copper (1,083°C), and higher than a starting temperature of the reaction between iron and carbon (approximately 900°C). In order to set the sintering temperature, an in-furnace temperature is set, for example, to from 1,000°C to 1,110°C. This temperature is lower than general in-furnace temperatures (1,130°C or more) at the time of sintering iron-based sintered compacts.

The sintered compact M' obtained through the sintering step is shifted to the sizing step so as to be subjected to dimensional correction. In this embodiment, as illustrated in FIG. 10, an inner peripheral surface, an outer peripheral surface, and both end surfaces of the sintered compact M' are compressed by using a sizing die assembly comprising a die 23, a core rod 24, an upper punch 25, and a lower punch 26. In this manner, sizing of the sintered compact M' is performed. After that, in the oil-impregnating step, the lubricant is impregnated into inner pores of the sintered compact M'. With this, the sintered bearing 1 is completed. In order to remove retained austenite in the sintered compact M', the sintered compact M' may be tempered after the sintering.

At the time of sintering in the sintering step illustrated in FIG. 9, first, phosphorus contained in the first powder M1 is molten. A melt of phosphorus is dispersed deeply into the Fe particles by capillary action. Further, the melt of phosphorus wets surfaces of the Cu particles. Thus, Cu is molten at a temperature lower than its melting point, and Cu and phosphorus thus molten penetrate the Fe particles, and disperse to the inside of the Fe particles. With this, the iron particles are firmly bound to each other, and the strength of the base layer 3 is increased. Further, the sintering is performed at a temperature higher than the starting temperature of the reaction between iron and carbon, and hence the hard pearlite phase (partially, ferrite phase) is formed in Fe structure. The strength of the base layer 3 is secured through the sintering process described above. Thus, also when the sintering temperature is reduced to a temperature lower than the sintering temperatures of general iron-based sintered compacts as described above, the strength necessary for the base layer 3 can be secured. When the sintering temperature is set lower than the melting point of copper, copper contained in the sliding layer 2 (second powder M2) is maintained in a solid form without being molten through the sintering. Thus, copper present in the sliding layer 2, specifically, in the sliding surface A is not drawn into the base layer 3, and hence a target amount of copper can be distributed in the sliding surface A. In this manner, both the sliding property of the sliding surface A and strength of the sintered compact M' can be secured.

Further, the quenching-property enhancing elements such as Ni and Mo are contained in the sliding layer 2. Thus, without additionally performing heat treatment such as carburizing and quenching, hardness can be increased by causing the martensitic transformation and the bainitic transformation in the Fe structure of the sliding layer 2 (sinter hardening) during passage through the cooling zone 20b of the continuous sintering furnace 20 illustrated in FIG. 9. With this, the sliding surface A is increased in hardness, and hence can be enhanced in wear resistance. Further, the strength of the base layer 3 is also increased through the dispersion of copper and phosphorus in the base layer 3, and hence strength (such as radial crushing strength) of the entire sintered compact is increased. Thus, it is possible to achieve durability against use in which an impact load is frequently applied under large surface pressure, specifically, against use as a bearing at the joint portion of the arm of the construction machinery.

Meanwhile, the quenching-property enhancing elements are not added to the base layer 3 that accounts for a large proportion of the sintered compact M'. Thus, use amounts of those expensive elements in the entire bearing are reduced, and hence cost reduction of the bearing can be achieved. Further, in the base layer 3, the sinter hardening is not performed, and hence the martensitic transformation and the bainitic transformation are not caused. Thus, the base layer 3 is softer than the sliding layer 2. Therefore, the dimensional correction of the sintered compact M' can be performed in the sizing step. In the configuration of Patent Literature 1 described above, the entire sintered compact is hardened through oil quenching after sintering, and hence the dimensional correction of the sintered compact needs to be performed through machining such as cutting and grinding. However, the dimensional correction of the sintered compact M' of the present invention can be performed through the sizing. Thus, post-processing through machining need not be performed. Further, even when the quenching after the sintering is not performed, necessary and sufficient strength (specifically, radial crushing strength of 500 MPa or more) can be secured. In this manner, the quenching step and the machining step after the sintering can be omitted. Thus, further cost reduction of the sintered bearing 1 can be achieved in comparison with the invention disclosed in Patent Literature 1.

For reference, the surface (bearing surface A) of the sliding layer 2 after the sizing has a hardness of 85 or more, preferably 90 or more, more preferably 95 or more on the Rockwell F-scale (HRF) specified in "JIS Z2245:2011." Further, the surface of the base layer 3 after the sizing has a hardness of from approximately 55 to approximately 85 on the Rockwell F-scale.

The entire graphite in the base layer 3 basically has been decomposed into carbon through the sintering, and has reacted to Fe. Meanwhile, the graphite in the sliding layer 2 partially remains as particles after the sintering. This is because a content of copper is higher in the sliding layer 2 than in the base layer 3, and hence the particles of copper cover parts of surfaces of the particles of iron, with the result that Fe and C are difficult to react to each other. In this manner, a larger amount of particles of graphite exist in the sliding layer 2 than in the base layer 3. Thus, the particles of graphite can be used as a solid lubricant, and hence the sliding property of the sliding surface A can be enhanced.

Note that, the quenching-property enhancing elements (in this embodiment, Ni and Mo) are not contained in the first powder M1 corresponding to the base layer 3. Thus, theoretically, those elements are not contained in the base layer 3. However, actually, as shown in FIG. 12, by the procedure in the molding step illustrated in FIG. 3 to FIG. 8, a concentration gradient of those elements is present at an interface between the sliding layer 2 and the base layer 3. With this, a region containing the quenching-property enhancing elements is formed in a vicinity of the interface, and hence not only strength of the interface but also binding strength between the sliding layer 2 and the base layer 3 is increased. In this case, in the base layer 3, the quenching-property enhancing elements are not contained in a region sufficiently spaced apart from the sliding layer 2, such as a surface on an opposite side with respect to the sliding layer 2 (in this embodiment, outer peripheral surface of the base layer 3). It is desired that a radial dimension of a region R (concentration gradient layer) in which the concentration gradient is present be set within a range of from 0.1 mm to 1.0 mm, preferably within a range of from 0.2 mm to 0.5 mm. The radial dimension of the concentration gradient layer R can be adjusted depending on a radial thickness of the partition member 14 (see FIG. 3) of the two-color molding die assembly.

Similarly, the low-melting-point metal (in this embodiment, phosphorus) is not contained in the second powder M2 corresponding to the sliding layer 2. Thus, theoretically, the low-melting-point metal is not contained in the sliding layer 3. For the same reason as described above, a concentration gradient of the low-melting-point metal is present at the interface between the sliding layer 2 and the base layer 3. In the sliding layer 2, the low-melting-point metal is not contained in a region sufficiently spaced apart from the base layer 3, such as a surface on an opposite side with respect to the base layer 3 (in this embodiment, sliding surface A of the sliding layer 2).

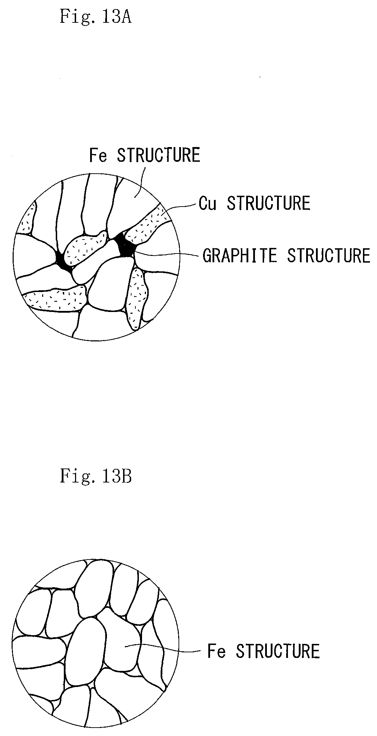

In the sintered bearing 1 manufactured by the procedure described above, microstructure of the sliding layer 2 is schematically illustrated in FIG. 13A, and microstructure of the base layer 3 is schematically illustrated in FIG. 13B.

As illustrated in FIG. 13A, the sliding layer 2 contains, as main components, Fe structure made of Fe as a matrix, Cu structure formed only of copper indicated by the dotted pattern, and graphite structure illustrated as the black regions. The Fe structure occupies a larger area than the Cu structure, and the graphite structure is smallest. The Fe structure forms quenched structure that contains the martensite phase and the bainite phase as main components, and partially contains the pearlite phase. Ni and Mo are dispersed in the quenched structure. The sliding layer 2 is iron-based metal structure that contains, at the same mixing ratio as that in the second powder M2, Cu of from 10 wt% to 30 wt% (preferably from 15 wt% to 20 wt%), C of from 0.5 wt% to 0.8 wt%, Ni of from 1.5 wt% to 3. 5 wt%, and Mo of from 0.5 wt% to 1.5 wt% as main components, and Fe and inevitable impurities as the balance.

Further, as illustrated in FIG. 13B, the base layer 3 is formed of the Fe structure made of Fe (pearlite phase and ferrite phase) as a matrix. Cu and P are dispersed in the Fe structure, and the particles of Cu do not exist in the base layer 3. Further, the quenched structure and the graphite structure do not exist therein. This base layer 3 is iron-based metal structure that contains, at the same mixing ratio as that in the first powder M1, Cu of from 2 wt% to 5 wt%, P of from 0.1 wt% to 0.6 wt% (preferably from 0.3 wt% to 0.5 wt%), and C of from 0.5 wt% to 0.8 wt% as main components, and Fe and inevitable impurities as the balance. The content of copper in the base layer 3 is lower than the content of copper in the sliding layer 2. Thus, a use amount of copper in the entire bearing is reduced, and hence cost reduction can be achieved.

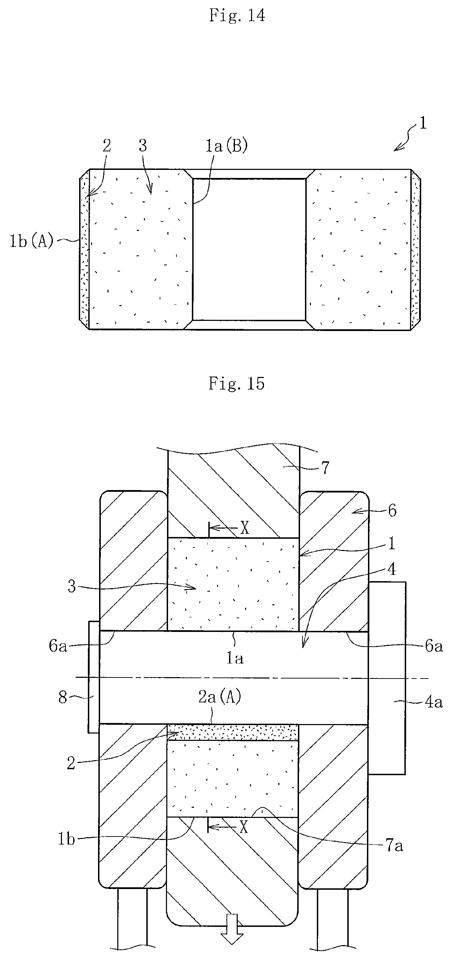

In the case described above, the inner peripheral surface of the sliding layer 2 is formed so as to serve as the sliding surface A. However, the present invention is not limited thereto. For example, as illustrated in FIG. 14, in the sintered bearing 1 to which the present invention is applicable, the outer peripheral surface 1b of the sintered bearing 1 may be formed so as to serve as the sliding surface A. In this case, the sliding layer 2 is formed on a radially outer side of the sintered bearing 1 so that an outer peripheral surface of the sliding layer 2 serves as the sliding surface A. Further, the base layer 3 is formed on a radially inner side of the sintered bearing 1 so that an inner peripheral surface of the base layer 3 serves as the mounting surface B. Compositions and functions of the sliding layer 2 and the base layer 3 are common to those of the sliding layer 2 and the base layer 3 described in the embodiment above. In addition, in FIG. 1, when the end surfaces of the sintered bearing 1 slide relative to the first arm 6 under the large surface pressure, each of the end surfaces of the sintered bearing may be formed so as to serve as the sliding surface A.

### [Second Embodiment]

Next, description is made of a second embodiment of the present invention.

Similarly to FIG. 1, FIG. 15 is a view for conceptually illustrating a cross-section of a joint portion of an arm of construction machinery. At this joint portion, the first arm 6 is arranged on a distal end side of the arm with respect to the second arm 7. In this case, the pin 4 fixed to the first arm 6 relatively sinks by gravity applied to the first arm 6. The pin 4 to serve as a shaft is supported by a lower region of the inner peripheral surface 1a of the sinteredbearing 1. Thus, at the time of the relative rotation between the first arm 6 and the second arm 7, the pin 4 slides relative mainly to the lower region of the inner peripheral surface 1a of the sintered bearing 1.

In this embodiment, a cross-section of the sliding layer 2 orthogonal to the axial direction (horizontal cross-section) is formed into a partially cylindrical shape with ends (semi-cylindrical shape). Further, a horizontal cross-section of the sliding surface A on an inner periphery of the sliding layer 2 is similarly formed into a partially-cylindrical surface shape with ends (in the illustrated example, semi-cylindrical-surface shape). The base layer 3 integrally comprises a thin portion 31 having a small radial thickness, and a thick portion 32 having a large radial thickness, and a circumferential region out of the sliding layer 2 corresponds to the thick portion 32. The inner peripheral surface 1a of the sintered bearing 1 is formed by the sliding surface A of the sliding layer 2 and an inner peripheral surface of the thick portion 32 of the base layer 3, and the outer peripheral surface of the base layer 3 corresponds to the outer peripheral surface 1b (mounting surface B) of the sintered bearing 1. As described above, at this joint portion, the pin 4 sinks by gravity, and slides relative to the lower region of the inner peripheral surface 1a of the sintered bearing 1. Thus, the sintered bearing 1 is inserted into the insertion hole 7a of the second arm 7 in such an orientation or a posture that the sliding surface A of the sliding layer 2 covers a lower region of the pin 4. With this, the pin 4 can be stably supported over a long time period by the sliding layer 2.

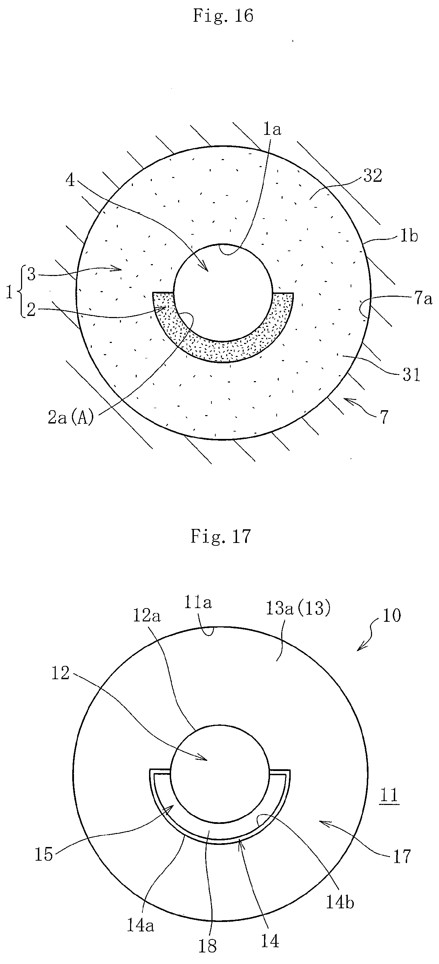

FIG. 17 is a view for illustrating a die assembly to be used in a compression-molding step for the sintered bearing 1 of this embodiment. Similarly to the die assembly illustrated in FIG. 3, this die assembly comprises the die 11, the core pin 12, a first lower punch 13, the partition member 14, a second lower punch 15, and the upper punch (not shown). The partition member 14 forms the second cavity 18 having a shape corresponding to a form of the semi-cylindrical sliding layer 2 (partially cylindrical shape). The configuration of the die assembly and the molding procedure in the compression-molding step of this embodiment are common to those in the compression-molding step illustrated in FIG. 3 to FIG. 8 except the shape of the partition member 14, and hence description thereof is omitted. Note that, in FIG. 17, the parts common to those of the die assembly illustrated in FIG. 3 to FIG. 8 are denoted by the same reference symbols in those figures.

According to the configuration of this embodiment, the sliding layer 2 containing not only a high content of copper but also a high content of the quenching-property enhancing elements is formed not over an entire periphery of the inner peripheral surface 1a of the sintered bearing 1 but only in the partial circumferential region. Thus, the use amounts of expensive copper and the expensive quenching-property enhancing elements are reduced, and hence cost reduction of the sintered bearing 1 can be achieved.

### [Third Embodiment]

Now, description is made of a third embodiment of the present invention.

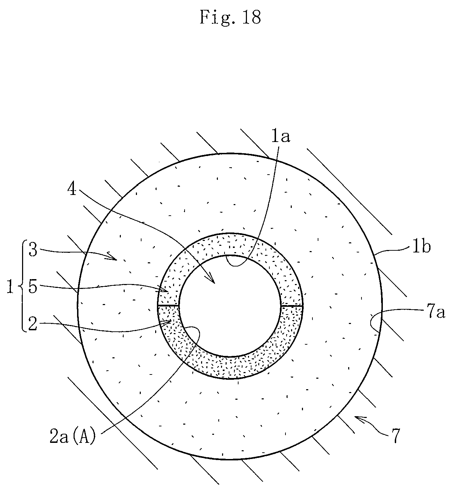

In the second embodiment described above, the sintered bearing 1 comprises the sliding layer 2 and the base layer 3 having the compositions different from each other. However, as illustrated in FIG. 18, the sintered bearing 1 may comprise three layers different from each other in composition. The sintered bearing 1 illustrated in FIG. 18 comprises not only the sliding layer 2 and the base layer 3 but also a radially inner layer 5 sintered together with the sliding layer 2 and the base layer 3. Each of the sliding layer 2 and the radially inner layer 5 is formed into the semi-cylindrical shape, and the base layer 3 is formed into a cylindrical shape. The sliding layer 2 and the radially inner layer 5 are continuous with each other in a circumferential direction. The sliding surface A of the sliding layer 2 and an inner peripheral surface of the radially inner layer 5 each have the semi-cylindrical-surface shape. With those surfaces, the inner peripheral surface 1a of the sintered bearing 1 is formed into a cylindrical surface shape. Further, the radial thickness of the sliding layer 2 and a radial thickness of the radially inner layer 5 are equal to each other in a radial direction, and hence the radial thickness of the base layer 3 is uniform all over the circumferential direction. As in the second embodiment, the sliding layer 2 is arranged in the lower region in a sinking direction of the pin 4. Thus, rotation of the pin 4 that sinks in a bearing gap is supported by the sliding surface A of the sliding layer 2.

### [Fourth Embodiment]

Next, description is made of a fourth embodiment of the present invention.

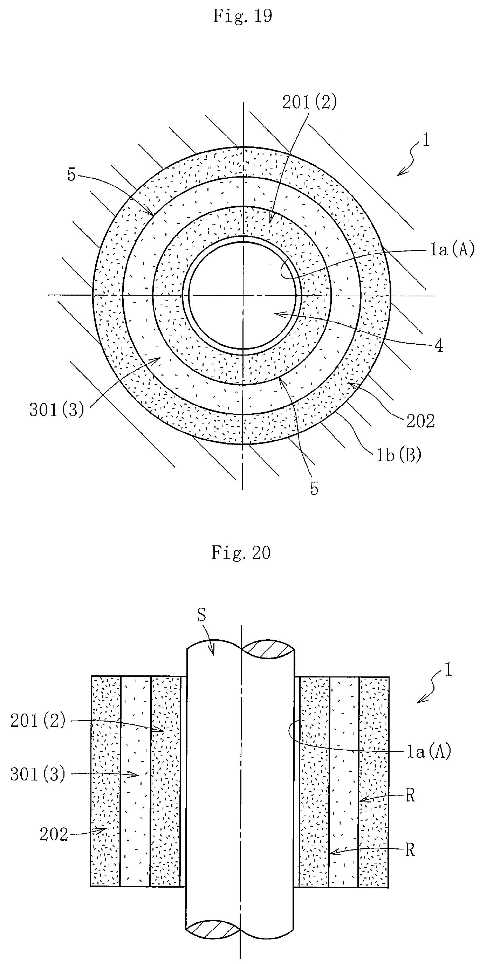

FIG. 19 and FIG. 20 are respectively a horizontal cross-sectional view (axially orthogonal cross-sectional view) and a vertical cross-sectional view (axially parallel cross-sectional view) for illustrating a sintered bearing 1 according to the fourth embodiment. This sintered bearing 1 is made of a metal sintered compact having a cylindrical shape in general, and is used, for example, at the j oint portion of the arm of the construction machinery illustrated in FIG. 1. The inner peripheral surface 1a of the sintered bearing 1 is formed into a cylindrical surface shape so that the shaft 4 (such as a coupling pin configured to couple the arms to each other) inserted along the inner periphery is supported in a relatively rotatable manner by the inner peripheral surface 1a having the cylindrical surface shape. In this embodiment, the inner peripheral surface 1a of the sintered bearing 1, which has the cylindrical shape, functions as the sliding surface A to slide relative to another member.

The sintered bearing 1 integrally comprises an intermediate portion 301, and a pair of surface layer portions 201 and 202 arranged on both sides in a radial direction with respect to the intermediate portion 301. The surface layer portion 201 on the radially inner side and the intermediate portion 301, and the intermediate portion 301 and the surface layer portion 202 on the radially outer side are bound to each other through sintering of the green compact.

The intermediate portion 301 is formed of the base layer 3 described above. Further, the surface layer portion 201 on the radially inner side is formed of the sliding layer 2 described above. Similarly to the surface layer portion 201 on the radially inner side, the surface layer portion 202 on the radially outer side is made of, for example, cylindrical sintered metal containing not only Fe as a main component, but also Cu, the alloying elements for enhancing a quenching property (in this case, Ni and Mo), and C. Concentrations (mixing ratio) of the elements of the surface layer portion 202 on the radially outer side may be set equal or unequal to concentrations of the elements of the surface layer portion 201 on the radially inner side. Note that, the sliding surface A slides relative to the shaft 4, and hence it is preferred that the surface layer portion 201 on the radially inner side be made of a sintered metal that is superior in sliding property to the surface layer portion 202 on the radially outer side. Thus, it is preferred that a concentration of Cu of the surface layer portion 201 on the radially inner side be set higher than a concentration of Cu of the surface layer portion 202 on the radially outer side.

When the surface layer portion 201 on the radially inner side and the surface layer portion 202 on the radially outer side contain the quenching-property enhancing elements, the martensitic transformation and the bainitic transformation (sinter hardening) are caused in the Fe structure contained in both the surface layer portions 201 and 202 by the sintering, and the surface layer portions 201 and 202 are increased in hardness. As a result, the sliding surface A and the mounting surface B that have high hardness and excellent wear resistance can be formed. Further, when the concentration of Cu of the surface layer portion 201 on the radially inner side is set higher than the concentration of Cu of the surface layer portion 202 on the radially outer side, the sliding layer A can be formed so as to have excellent sliding property. Thus, wear of the sliding surface A as a result of repetitive sliding relative to the shaft 4 can be suppressed.

It is preferred that a density of the intermediate portion 301 be set lower at least than a density of the surface layer portion 201 on the radially inner side of both the surface layer portions 201 and 202. When the density of the intermediate portion 301 is set lower than that of the surface layer portion 201 on the radially inner side, the lubricant retained in the intermediate portion 301 can be supplied to the surface layer portion 201 on the radially inner side by a capillary force. With this, an ample amount of the lubricant can be interposed between the sliding surface A and an outer peripheral surface of the shaft 4 so that wear of the sliding surface A can be effectively suppressed or prevented. In order to obtain the intermediate portion 301 having the density lower than that of the surface layer portion 201 on the radially inner side, it is appropriate, for example, to mold the intermediate portion 301 by using a powder having an average particle diameter (specifically, average particle diameter of the Fe powder being a main component powder) larger than that of a powder for molding the surface layer portion 201 on the radially inner side (when necessary, also than that of a powder for molding the surface layer portion 202 on the radially outer side). Note that, as long as the intermediate portion 301 basically has a function of an oil supply layer for supplying the lubricant to the surface layer portion 201 on the radially inner side, levels of a mechanical strength, wear resistance, a sliding property, and the like of the intermediate portion 301 need not be as high as those necessary for the surface layer portion 201 on the radially inner side. Thus, a content of Cu of the intermediate portion 301 need not be set unnecessarily high as long as the particles of Fe can be bound to each other with requisite minimum binding strength.

Further, the intermediate portion 301 does not contain the alloying elements for enhancing a quenching property, and hence the sinter hardening does not occur at the time of sintering. Thus, the intermediate portion 301 can be formed so as to be softer than the surface layer portion 201 on the radially inner side and the surface layer portion 202 on the radially outer side. In this case, the intermediate portion 301 can be utilized as a deformation absorbing portion of the sintered bearing 1. Thus, even when the sintered bearing 1 is press-fitted and fixed to the hole portion 7a of the arm, accuracies in shape and dimension of the sliding surface A are less liable to be adversely affected, and the shaft 4 is supported with high accuracy.

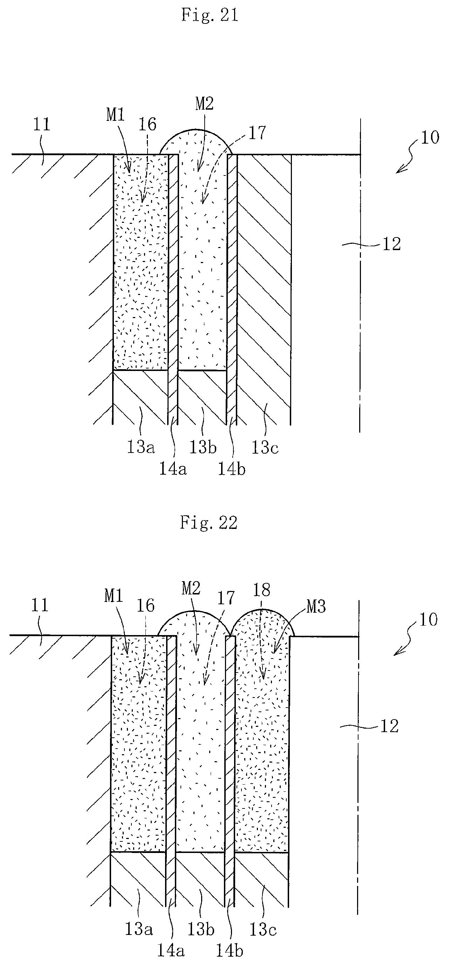

In the compression-molding step for manufacturing the sintered bearing 1 having the triple-layer structure described above, multi-color molding similar to the two-color molding described above is employed. Specifically, a plurality of cavities (three in this case) formed in isolation from each other in the radial direction within a single die assembly are respectively filled with the first powder M1 as a powder for forming the surface layer portion 202 on the radially outer side, the second powder M2 as a powder for forming the intermediate portion 301, and a third powder M3 as a powder for forming the surface layer portion 201 on the radially inner side. Next, the powders M1 to M3 are released from the mutually isolated state, and then the powders M1 to M3 are compressed simultaneously in the axial direction. In this manner, the green compact M is molded. This multi-color molding can be performed by using, for example, a molding die assembly apparatus 10 illustrated in FIG. 21 to FIG. 24.

The molding die assembly apparatus 10 comprises the die 11 configured to mold a radially outer surface of the green compact M, the core pin 12 arranged along the inner periphery of the die 11 and configured to mold the inner peripheral surface of the green compact M, first to third lower punches 13a to 13c and first and second partition members 14a and 14b arranged between the die 11 and the core pin 12 and configured to mold one end surface of the green compact M, and an upper punch 15 configured to mold another end surface of the green compact M. The lower punches 13a to 13c and the partition members 14a and 14b can be raised and lowered independently of each other.

In the molding die assembly apparatus 10 configured as described above, first, the second and third lower punches 13b and 13c and both the partition members 14a and 14b are located at the upper end position. In this state, the first lower punch 13a is lowered to the lower end. With this, the inner peripheral surface of the die 11, an outer peripheral surface of the first partition member 14a, and an upper end surface of the first lower punch 13a form a first cavity 16. The first powder M1 is filled into the first cavity 16. Next, as illustrated in FIG. 21, the second lower punch 13b is lowered to the lower end. With this, an inner peripheral surface of the first partition member 14a, an outer peripheral surface of the second partition member 14b, and an upper end surface of the second lower punch 13b form a second cavity 17. The second powder M2 is filled into the second cavity 17. The second powder M2 is caused to overflow the second cavity 17 so as to cover at least an upper side of the first partition member 14a. In the illustrated example, a part of a region on an upper side of the second partition member 14b is also covered with the second powder M2.

The first powder M1 has a metal composition corresponding to that of the surface layer portion 202 on the radially outer side, and the second powder M2 has a metal composition corresponding to that of the intermediate portion 301. Note that, in order to form the intermediate portion 301 having the density lower than that of the surface layer portion 201 on the radially inner side and that of the surface layer portion 202 on the radially outer side, the powder having the particle diameter larger than that of the Fe powder being a main component powder in the first powder M1, and than that of the Fe powder being a main component powder in the third powder M3 described later is used as the Fe powder being a main component powder in the second powder M2.

Then, as illustrated in FIG. 22, the third lower punch 13c is lowered to the lower end. With this, an inner peripheral surface of the second partition member 14b, the outer peripheral surface of the core pin 12, and an upper end surface of the third lower punch 14c form a third cavity 18. The third powder M3 having the metal composition corresponding to that of the surface layer portion 201 on the radially inner side is filled into the third cavity 18. At this time, the third powder M3 is caused to overflow the third cavity 18 so as to cover at least a part of the region on the upper side of the second partition member 14b.

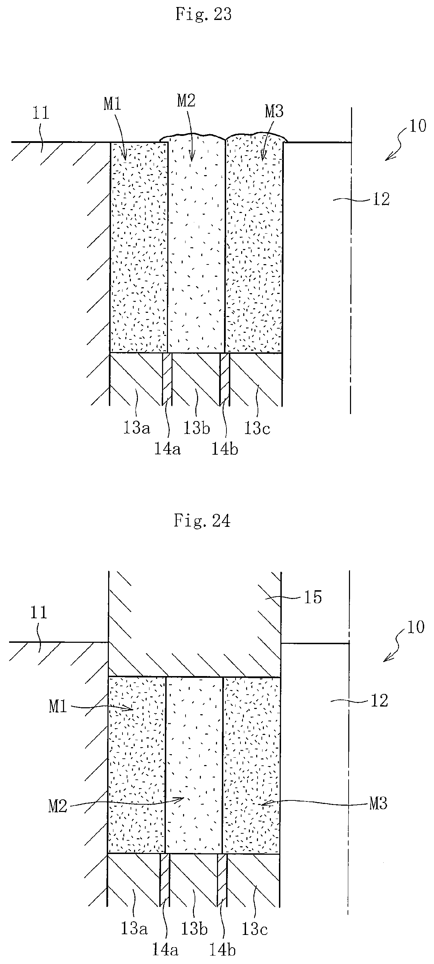

Next, as illustrated in FIG. 23, both the partition members 14a and 14b are lowered. With this, a part of the second powder M2, which has covered the upper side of the first partition member 14a, is filled into a space formed by removing the first partition member 14a. As a result, the first powder M1 and the second powder M2 are slightly mixed and held in contact with each other. Further, at the same time, parts of the second powder M2 and the third powder M3, which have covered the upper side of the second partition member 14b, are filled into a space formed by removing the second partition member 14b. As a result, the second powder M2 and the third powder M3 are slightly mixed and held in contact with each other. In this manner, the cavity 19 formed by the inner peripheral surface of the die 11, the upper end surfaces of the lower punches 13a to 13c, upper end surfaces of the partition members 14a and 14b, and the outer peripheral surface of the core pin 12 is filled with the first powder M1, the second powder M2, and the third powder M3.

Then, after a surplus of the powders M2 andM2 overflowing the cavity 19 is removed, as illustrated in FIG. 24, the upper punch 16 is lowered so as to axially compress the powders M1 to M3 filled in the cavity 19. With this, the green compact M is molded. After the green compact M is molded, the lower punches 13a to 13c and the partition members 14a and 14b are raised integrally with each other, and the green compact M is taken out of the molding die assembly apparatus 10.

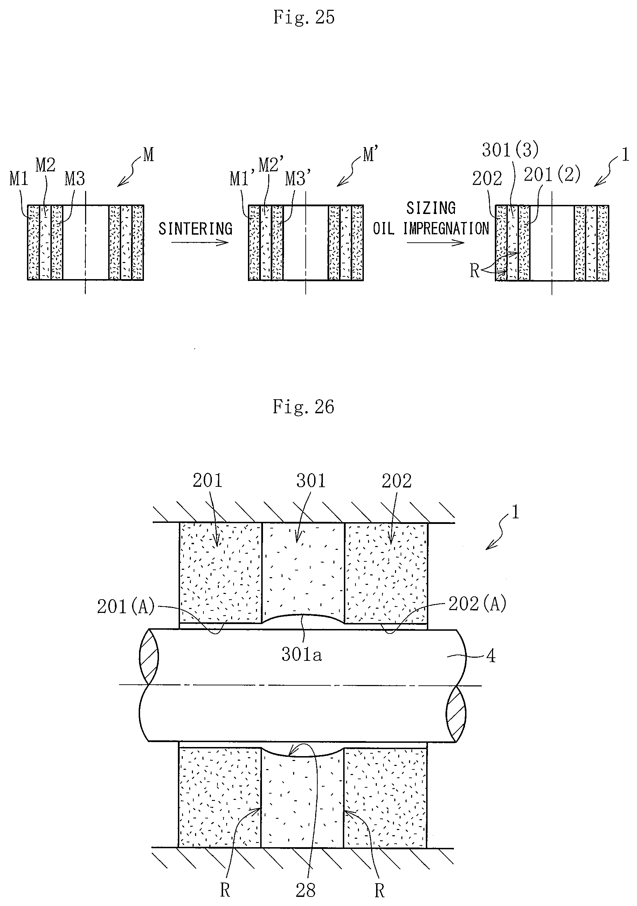

The green compact M obtained through the compression-molding step described above is heated and sintered under predetermined conditions in the sintering step. With this, the sintered compact M' (see FIG. 25) is obtained. At the time of sintering the green compact M, a green compact of the second powder M2 is sintered together with a green compact of the first powder M1 and a green compact of the third powder M3 while being in contact with the green compacts of the first powder M1 and the third powder M3. Thus, in the sintered compact M' to be obtained through the sintering of the green compact M, through intermediation of parts to be transformed into the concentration gradient layers R, a part M2' to be transformed into the intermediate portion 301 is integrated with a part M1' to be transformed into the surface layer portion 202 on the radially outer side and a part M3' to be transformed into the surface layer portion 201 on the radially inner side.

The sintered compact M' obtained through the sintering step is finished so as to have a predetermined shape and dimensions in the sizing step. The sizing of the sintered compact M' is performed by so-called sizing in which, as illustrated, for example, in FIG. 10, the radially outer surface, the radially inner surface, and both the end surfaces of the sintered compact M' are compressed by using the sizing die comprising the die 23, the core rod 24, and the upper and the lower punches 25 and 26 that are arranged coaxially with each other. When the sizing is performed, surface hardness of the sintered compact M' can also be increased through workhardening. Thus, the sinteredbearing 1 can be further increased in strength. After that, the lubricating oil or a liquid grease is impregnated into the inner pores of the sintered compact M' in the oil-impregnating step. With this, the sintered bearing 1 illustrated in FIG. 19 and FIG. 20 is completed. Note that, a heat treatment (tempering) step of removing internal stress accumulated in the sintered compact M' may be performed between the sizing step and the oil-impregnating step.

### [Fifth Embodiment]

Now, description is made of a fifth embodiment of the present invention.

In the case described in the fourth embodiment, the three metal layers bound to each other through the sintering (surface layer portion 201 on the radially inner side, intermediate portion 301, and surface layer portion 202 on the radially outer side) are laminated in the radial direction. However, as in the example illustrated in FIG. 26, three or more metal layers may be laminated in the axial direction. Specifically, in the sintered bearing 1, the intermediate portion 301 and the two surface layer portions 201 and 202 may be laminated in the axial direction. This sintered bearing 1 is suited to use in supporting, in a rotatable manner, the shaft 4 to be rotated at high speed, such as a rotary shaft of a motor. Similarly to the sintered bearing 1 of the first embodiment, the lubricating oil is impregnated into the inner pores of the sintered bearing 1. In this case, each of the surface layer portions 201 and 202 may be formed of the sliding layer, and the intermediate portion 301 may be formed of the base portion 3.

In this sintered bearing 1, an inner peripheral surface 201a of the one surface layer portion 201, and an inner peripheral surface 202a of the another surface layer portion 202 are each formed so as to have a relatively small diameter, thereby forming the sliding surface A for supporting the shaft 4. An inner peripheral surface 301a of the intermediate portion 301 is formed so as to have a relatively large diameter, thereby forming a so-called intermediate relief portion 28. With this, in comparison with a case where the inner peripheral surfaces 201a, 202a, and 301a are formed so as to have the same diameter such that the entire inner peripheral surface of the sintered bearing 1 serves as the sliding surface A, a rotational torque of the shaft 4 can be reduced, and the shaft 4 can be supported with high accuracy.

In FIG. 26, the portions 201, 202, and 203 are formed so as to have substantially the same thickness (axial dimension). However, the portions 201, 202, and 301 may be formed so as to have thicknesses different from each other. For example, when the thickness of the intermediate portion 301 is set sufficiently larger than the thickness of each of the surface layer portions 201 and 202, the use amounts of the expensive quenching-property enhancing alloy sources are reduced in the entire sintered bearing 1, and hence cost reduction of the sintered bearing 1 can be achieved.

Respectively between the one surface layer portion 202 and the intermediate portion 301 and between the intermediate portion 301 and the another surface layer portion 202, the cylindrical concentration gradient layers R are formed. In each of the concentration gradient layers R, the concentration gradient of the quenching-property enhancing elements (Ni and Mo) is present. The portions 201, 202, and 301 are bound to each other substantially through intermediation of those concentration gradient layers R.

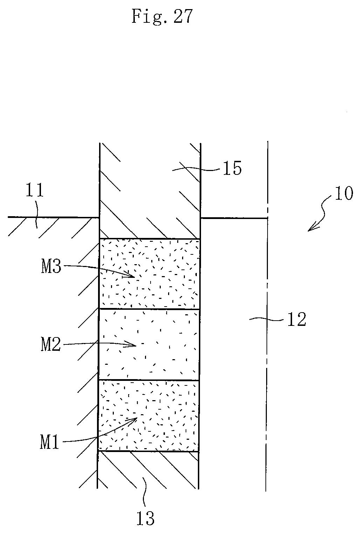

FIG. 27 is a schematic view for illustrating a compression-molding step for manufacturing the sintered bearing 1 illustrated in FIG. 26. The molding die assembly apparatus 10 in the illustrated example comprises the cylindrical die 11 configured to mold a radially outer surface of a green compact, the core pin 12 configured to mold a radially inner surface of the green compact, and the upper punch 15 and the lower punch 13 configured to mold one end surface and another end surface of the green compact. In this molding die assembly apparatus 10, for example, the lower punch 13 is lowered so that a cavity is formed by the inner peripheral surface of the die 11, the outer peripheral surface of the core pin 12, and the upper end surface of the lower punch 13. Then, the first powder M1 corresponding to the one surface layer portion 201, the second powder M2 corresponding to the intermediate portion 301, and the third powder M3 corresponding to the another surface layer portion 202 are filled into the cavity in the stated order. At this time, at a contact portion between the first powder M1 and the second powder M2, a dispersion layer in which particles of the second powder M2 are dispersed among particles of the first powder M1 is formed. Further, at a contact portion between the second powder M2 and the third powder M3, another dispersion layer in which particles of the third powder M3 are dispersed among the particles of the second powder M2 is formed.

Note that, at the time of supplying the powders M1 to M3 into the molding die assembly apparatus 30, the lower punch 13 may be lowered in three phases so as to sequentially form cavities, and the first to third powders M1 to M3 may be filled sequentially into those cavities.

After the powders M1 to M3 are filled into the cavity in this manner, the upper punch 15 is lowered so as to compress the powders M1 to M3 in the axial direction. With this, the green compact is molded. After the green compact is molded, the lower punch 13 is raised, and the green compact is taken out of the molding die assembly apparatus 10. Then, the green compact thus taken out is shifted to the sintering step. Next, a sintered compact obtained therethrough is shifted sequentially to the sizing step and the oil-impregnating step. In this manner, the sintered bearing 1 is obtained.

The above description exemplifies the sintered bearings 1 having the two metal layers (sliding layer 2 and base layer 3) or the three metal layers (two surface layer portions 201 and 202, and intermediate portion 301) laminated in the radial direction or the axial direction. However, the present invention is suitably applicable also to a sintered bearing having four or more metal layers laminated in the radial direction or the axial direction.

Further, the forms of the sintered compact M' and the sliding surface A are arbitrary, and the present invention is applicable to other sliding members such as a spherical bush and a flat pad-like member (such as boom pad). As for the former, the sliding surface A is formed into a spherical surface shape. As for the latter, the sliding surface A is formed into a flat surface shape. One or a plurality of recessed portions (having a groove shape, for example) may be formed in the sliding surface A so as to be utilized as a lubricant storage.

Further, the above description exemplifies a case where the interface between the sliding layer 2 and the base layer 3 assumes a cylindrical surface shape, but the present invention is not limited thereto. A cross-section of the interface orthogonal to an axis may be formed into a non-circular shape (for example, polygonal shape or spline shape) (not shown). Thus, the binding strength between the sliding layer 2 and the base layer 3 is further increased. The shape of the interface is formed in conformity with a shape of the partition member 14 (see FIG. 3 and the like) in the compression-molding step, and hence the shape of the interface may be changed through change of the shape of the partition member 14.

Further, the above-mentioned embodiments exemplify a case where the sintered bearing 1 is applied to construction machinery, but the present invention is not limited thereto. The sliding member of the present invention may be suitably applied to such various applications that high surface pressure is applied to the sliding surface.

### Reference Signs List

- 1: sintered bearing
- 2: sliding layer
- 3: base layer
- 4: pin (shaft)
- 6: first arm
- 7: second arm
- 20: sintering furnace
- A: sliding surface (bearing surface)
- B: mounting surface
- M: green compact
- M': sintered compact
- M1: first powder
- M2: second powder

## Claims

1. A sliding member made of a sintered compact to have a sliding surface slidable relative to another member, the sliding member comprising:
a sliding layer that contains Fe containing an alloying element, Cu, and C as main components; and
a base layer that is sintered together with the sliding layer while being in contact with the sliding layer, and contains Fe, Cu, a low-melting-point metal having a melting point lower than a melting point of the Cu, and C as main components,
the sliding layer having the sliding surface.

2. The slidingmember according to claim 1, wherein the alloying element comprises at least one kind selected from among Ni, Mo, Mn, and Cr.

3. The sliding member according to claim 2,
wherein the sliding layer contains Fe structure, and
wherein at least a part of the Fe structure undergoes martensitic transformation and bainitic transformation.

4. The sliding member according to claim 1, wherein the low-melting-point metal contained in the base layer comprises P.

5. The sliding member according to claim 1, wherein a concentration of the low-melting-point metal in the base layer is set to from 0.1 wt% to 0.6 wt%.

6. The sliding member according to claim 1,
wherein a concentration of the Cu in the sliding layer is set to from 10 wt% to 30 wt%, and
wherein a concentration of the Cu in the base layer is set lower than the concentration of the Cu in the sliding layer.

7. The slidingmember according to claim 1, wherein the sintered compact is obtained through sintering at a temperature that is lower than the melting point of the Cu and higher than a starting temperature of a reaction between the Fe and the C.

8. The sliding member according to claim 1, wherein the sliding member is used as a bearing at a j oint portion of an arm of construction machinery.

9. The sliding member according to claim 1, wherein a cross-section of the sliding layer orthogonal to an axial direction of the sliding member is formed into a partially cylindrical shape with ends.

10. The sliding member according to claim 1, further comprising:
an intermediate portion; and
surface layer portions arranged on both sides of the intermediate portion,
wherein the intermediate portion is formed of the base layer, and
wherein at least one of the surface layer portions is formed of the sliding layer.

11. The sliding member according to claim 10, wherein a density of the intermediate portion is set lower than a density of the at least one of the surface layer portions, which is formed of the sliding layer.

12. A method of manufacturing a sliding member, the sliding member comprising a sliding layer and a base layer, the sliding layer having a sliding surface slidable relative to another member,
the method comprising:
preparing a first powder that contains Fe, Cu, a metal having a melting point lower than a melting point of the Cu, and C as main components;
preparing a second powder that contains Fe containing an alloying element, Cu, and C as main components;
arranging a partition member in a die assembly to form a first cavity and a second cavity;
filling the first powder into the first cavity;
filling the second powder into the second cavity;
compressing, under a state in which the partition member is removed, the first powder and the second powder in the die assembly simultaneously to form a green compact;
sintering the green compact to form the base layer having a composition corresponding to the first powder and the sliding layer having a composition corresponding to the second powder; and
performing sizing of a sintered compact obtained after the sintering.

13. The method of manufacturing a sliding member according to claim 12, wherein the alloying element comprises at least one kind selected from among Ni, Mo, Mn, and Cr.

14. The method of manufacturing a sliding member according to claim 13,
wherein a thickness of the base layer is set larger than a thickness of the sliding layer, and
wherein an apparent density of the first powder is set lower than an apparent density of the second powder.
